# FASCICULE DE BREVET EUROPEEN

(11) **EP 0 711 440 B1**
(45) Date de publication et mention de la délivrance du brevet: **02.10.2002**
(21) Numéro de dépôt: 95921869.4
(22) Date de dépôt: 31.05.1995
(51) Int. Cl.: G06K 7/06, H01R 12/16

(54) **CONNECTEUR ELECTRIQUE POUR LE RACCORDEMENT D'UNE CARTE A MEMOIRE ELECTRONIQUE**
ELEKTRISCHE KONTAKTEINHEIT ZUM KONTAKTIEREN EINER ELEKTRONISCHEN SPEICHERKARTE
ELECTRIC CONNECTOR FOR CONNECTING AN ELECTRONIC SMART CARD

(30) Priorité: 01.06.1994 FR 9406685
(43) Date de publication de la demande: 15.05.1996
(73) Titulaire: ITT INDUSTRIES, 39100 Dole (FR)
(72) Inventeur: BRICAUD, Hervé, F-39100 Dole (FR); VALCHER, Fabrice, F-39100 Dole (FR)
(74) Mandataire: Kohn, Philippe
(86) Numéro de dépôt international: FR9500710
(87) Numéro de publication internationale: WO95033245

(56) Documents cités:
- EP-A- 0 274 534
- EP-A- 0 366 513
- EP-A- 0 568 971
- WO-A-95/18421
- US-A- 3 638 033

## Description

La présente invention concerne un connecteur électrique pour le raccordement d'une carte à mémoire électronique, également appelée carte à microcircuit, comportant sur une de ses faces principales une pluralité de plages de contact électrique alignées parallèlement à la direction d'introduction de la carte dans un dispositif de lecture-écriture.

L'invention concerne plus particulièrement un connecteur électrique comportant un corps en matériau isolant réalisé par moulage présentant une face supérieure plane parallèle à la direction d'introduction de la carte et une pluralité de conducteurs électriques en forme de lames déformables élastiquement qui s'étendent parallèlement à la direction d'introduction de la carte, chaque lame de contact comprenant une première extrémité incurvée de contact avec l'une des plage de la carte, faisant saillie au-dessus de la face supérieure plane du corps, une portion médiane de liaison de la lame au corps, et une seconde extrémité de raccordement de la lame à un circuit de traitement du dispositif de lecture-ecriture faisant saillie latéralement par rapport à la face supérieure.

Une conception d'un tel connecteur est décrite et représentée dans la demande de brevet français FR-A-2 714 539.

Dans cette conception, selon laquelle le corps est réalisé en deux parties, la partie supérieure formant couvercle comporte une collerette périphérique agencée au voisinage de la face supérieure du connecteur et qui s'étend latéralement au-dessus des secondes extrémités de raccordement des lames de contact.

Une telle collerette est avantageuse en ce qu'elle protège au moins partiellement les secondes extrémités de raccordement lors des manipulations du connecteur, ainsi que lors de son stockage, mais elle nuit à la facilité de raccordement des secondes extrémités de raccordement, par exemple par soudage infrarouge ou aux ultrasons ou par brasage.

La présente invention a pour but de proposer une nouvelle conception d'un tel connecteur qui permette de remédier à cet inconvénient.

Dans ce but l'invention propose un connecteur du type mentionné précédemment, caractérisé en ce que le corps en matériau isolant comporte une collerette supérieure qui s'étend latéralement jusqu'aux secondes extrémités de raccordement des lames et en ce que la collerette comporte une série d'évidements agencés au droit des secondes extrémités de raccordement pour permettre d'accéder, depuis la face supérieure du connecteur, à ces secondes extrémités en vue de leur raccordement, notamment par soudage par infrarouge

Selon d'autres caractéristiques de l'invention :
- la collerette est constituée de deux tronçons parallèles agencés respectivement au-dessus de deux faces latérales parallèles du corps du connecteur ;
- la collerette s'étend latéralement au-delà des secondes extrémités de raccordement des lames de contact ;
- la collerette délimite avec la face supérieure du connecteur un décrochement pour permettre le montage du connecteur dans une ouverture formée dans une plaque avec la face supérieure du connecteur en affleurement avec une face correspondante de la plaque ;
- le corps en matériau isolant du connecteur comporte une première partie formant support des lames de contact et une seconde partie formant couvercle supérieur, la collerette étant formée sur le couvercle ;
- le décrochement est formé dans le couvercle.

D'autres caractéristiques et avantage de l'invention apparaîtront à la lecture de la description détaillée qui va suivre pour la compréhension de laquelle on se reportera au dessin annexé dans lequel :
- la figure 1 est une vue latérale en élévation d'un premier exemple de réalisation d'un connecteur conforme aux enseignements de l'invention ;
- la figure 2 est une vue de dessus du connecteur illustré sur la figure 1 ;
- la figure 3 est une vue de dessous du connecteur illustré sur la figure 1 ;
- la figure 4 est une vue latérale de gauche de la figure 3 ; et
- la figure 5 est une vue similaire à celle de la figure 1 illustrant un second mode de réalisation d'un connecteur conforme aux enseignements de l'invention.

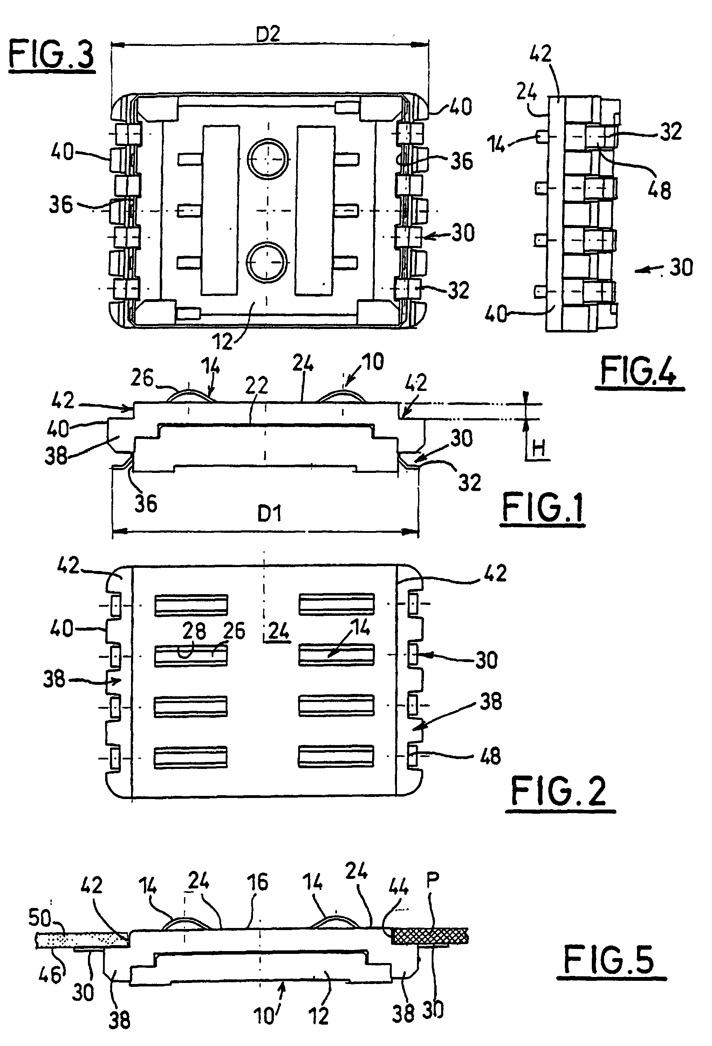

On a représenté sur les figures 1 à 4 un connecteur 10 pour le raccordement d'une carte à mémoire électronique (non représentée), dont la conception est illustrée en détails dans la demande FR-A-2 714 539.

Le connecteur 10 est pour l'essentiel constitué par un corps en matériau isolant comportant une première partie 12 formant socle et servant de support à des lames conductrices de contact 14.

Le corps en matériau isolant comporte également une deuxième partie, c'est-à-dire une partie supérieure en considérant la figure 1, réalisée sous la forme d'un couvercle 16 dont la face inférieure 18 délimite un logement 20 dans lequel est reçue la partie supérieure du support 12, la face inférieure 18 prenant appui contre la face supérieure 22 du support 12.

La face supérieure 24 du couvercle 16 est une face plane et constitue au sens de l'invention, la face supérieure plane du connecteur 10 au-delà font saillie verticalement vers le haut les premières extrémités incurvées 26 des lames de contact 14 à travers des fentes 28 formées dans le couvercle 16.

Chacune des huit lames de contact 14 est fixée par une portion intermédiaire (non représentée sur les figures) au support 12 et elle se termine par une seconde extrémité 30 permettant son raccordement avec des zones conductrices correspondantes d'une plaque à circuit imprimé appartenant à un dispositif de lecture-écriture (non représentée sur les figures 1 à 4).

Dans le mode de réalisation illustré sur les figures 1 à 4, les extrémités de raccordement 30 sont des pattes repliées à 90° dont les extrémités libres 32 sont susceptibles de venir en appui contre des zones conductrices de la plaque à circuit imprimé sur une face de laquelle repose la face inférieure 34 du support 12.

Les secondes extrémités de raccordement 30 font saillie latéralement par rapport aux faces latérales parallèles et opposées 36 du support 12.

On a représenté sur la figure 1 la distance D1 correspondant à l'encombrement latéral hors-tout des secondes extrémités de raccordement 30 des lames de contact 14.

Le couvercle 16 comporte deux tronçons latéraux et parallèles 38 d'une collerette latérale qui s'étendent latéralement au-dessus des secondes extrémités de raccordement 30.

Comme on peut le voir sur les figures 1 et 2, la largeur hors-tout D2 qui sépare les faces latérales opposées 40 des deux tronçons 38 de la collerette est légèrement supérieure à la distance D1 de manière à protéger les secondes extrémités de raccordement 30 lors des manipulations du connecteur.

Conformément aux enseignements de l'invention, chaque tronçon 38 de la collerette comporte une série d'évidements 48 qui sont respectivement agencés au-dessus et au droit des secondes extrémités de raccordement 30 de manière à pouvoir accéder à ces dernières verticalement depuis la face supérieure 24 du connecteur 10 pour en effectuer le soudage, par exemple par un faisceau infrarouge.

La collerette 38 est formée légèrement plus bas que la face supérieure 24 du connecteur 10 de manière à délimiter deux décrochements latéraux 42 qui permettent, comme cela est illustré sur la figure 5, le montage du connecteur 10 dans une ouverture 44 de dimensions correspondantes formée dans une plaque P à circuit imprimé, les secondes extrémités ou pattes de raccordement 30 étant dans ce cas des pattes rectilignes qui s'étendent latéralement pour être soudées sur une face en vis-à-vis 46 de la plaque.

La hauteur H du décrochement 42 correspond à cet effet sensiblement à l'épaisseur de la plaque P de manière que la face supérieure 24 du connecteur 10 soit sensiblement en affleurement avec la face correspondante 50 de la plaque P.

La face 24 et la face 50 constituent ainsi sensiblement une face plane continue pour le glissement de la carte à mémoire.

Afin de faciliter davantage l'exécution des opérations de soudage, et notamment d'augmenter l'angle du faisceau de soudage et de permettre le passage de la soudure, il est possible chanfreiner les bords en vis-à-vis des évidements comme cela est illustré sur les figures.

L'invention qui vient d'être décrite n'est pas limitée à la conception d'un connecteur dont le corps est en deux parties, celui-ci pouvant être réalisé en une seule pièce moulée en matériau isolant.

## Revendications

1. Connecteur électrique (10) pour le raccordement d'une carte à mémoire électronique comportant sur une de ses faces principales une pluralité de plages de contact électrique alignées parallèlement à la direction d'introduction de la carte dans un dispositif de lecture-écriture, le connecteur comportant un corps en matériau isolant (12,16) realise par moulage présentant une face supérieure plane (24) parallèle à la direction d'introduction de la carte et une pluralité de conducteurs électriques en forme de lames déformables élastiquement (14) qui s'étendent parallèlement à la direction d'introduction de la carte, chaque lame (14) de contact comprenant une première extrémité incurvée (26) de contact avec l'une des plages de la carte, faisant saillie au-dessus de la face supérieure plane (24) du corps du connecteur, une portion médiane de liaison de la lame (14) au corps et une seconde extrémité (30) de raccordement de la lame (14) à un circuit de traitement du dispositif de lecture-écriture, faisant saillie latéralement par rapport à la face supérieure du corps le corps en matériau isolant (12, 16) comporte une collerette supérieure (38) qui s'étend latéralement au moins jusqu'aux secondes extrémités (30) de raccordement des lames (14), **caractérisé en ce que** la collerette (38) comporte une série d'évidements (48) agencés au droit des secondes extrémités (30) de raccordement pour permettre d'accéder, depuis la face supérieure (24) du connecteur (10), à ces secondes extrémités en vue de leur raccordement, par soudage par infrarouge ou aux ultrasons.

2. Connecteur électrique selon la revendication 1, **caractérisé en ce que** la collerette est constituée de deux tronçons parallèles (38) agencés respectivement au-dessus de deux faces latérales parallèles (36) du corps du connecteur.

3. Connecteur électrique selon l'une des revendications 1 ou 2, **caractérisé en ce que** la collerette (38) s'étend latéralement au-delà des secondes extrémités (30) de raccordement des lames de contact (14).

4. Connecteur électrique selon l'une quelconque des revendications précédentes, **caractérisé en ce que** la collerette (38) délimite avec la face supérieure (24) du connecteur un décrochement (42) pour permettre le montage du connecteur (10) dans une ouverture (44) formée dans une plaque (P) avec la face supérieure (24) du connecteur (10) en affleurement avec une face correspondante (50) de la plaque (P).

5. Connecteur électrique selon l'une quelconque des revendications précédentes, **caractérisé en ce que** le corps en matériau isolant du connecteur comporte une première partie (12) formant support des lames de contact (14) et une seconde partie (16) formant couvercle supérieur, et **en ce que** la collerette (38) est formée sur le couvercle (16).

6. Connecteur électrique selon la revendication 5 prise en combinaison avec la revendication 4, **caractérisé en ce que** le décrochement (42) est formé dans le couvercle (16).

## Patentansprüche

1. Elektrische Kontakteinheit (10) zur Kontaktierung einer elektronischen Speicherkarte, welche auf einer seiner Hauptseiten eine Vielzahl von elektrischen Kontaktzonen aufweist, welche parallel zur Einführrichtung der Karte in eine Lese-Schreib-Vorrichtung ausgerichtet sind, wobei die Kontakteinheit einen durch Gießen hergestellten Rumpf aus einem isolierenden Material (12, 16) umfasst, welcher parallel zur Einführrichtung der Karte, eine flache Oberseite und eine Vielzahl von elektrischen Leitern in Form von parallel zur Einführrichtung der Karte verlaufenden elastisch deformierbaren Zungen (14) aufweist, wobei jede Kontaktzunge (14) ein erstes gekrümmtes Ende (26) zum Kontakt mit einer der Zonen der Karte, das über die flache Oberseite (24) des Rumpfs der Kontakteinheit hinausragt, einen Mittelabschnitt zur Verbindung der Zunge (14) mit dem Rumpf, und ein zweites Ende (30) zum Kontaktieren der Zunge (14) mit einem Verarbeitungsschaltkreis der Lese-Schreib-Vorrichtung, welches in Bezug auf die Oberseite des Rumpfs seitlich übersteht, umfasst, wobei der Rumpf aus isolierendem Material (12, 16) einen oberen Kragen (38) aufweist, der sich seitlich wenigstens bis zu den zweiten Verbindungsenden (30) der Zungen (14) erstreckt,
**dadurch gekennzeichnet, dass** der Kragen (38) eine Reihe von Vertiefungen (48) umfasst, die fluchtend zu den zweiten Verbindungsenden (30) angeordnet sind, um es zu ermöglichen, von der Oberseite (24) der Kontakteinheit (10) auf deren zweiten Enden zu deren Verbindung durch Infrarot- oder Ultraschallverschweißung zuzugreifen.

2. Elektrische Kontakteinheit nach Anspruch 1,
**dadurch gekennzeichnet, dass** der Kragen aus zwei parallelen Abschnitten (38) zusammengesetzt ist, die jeweils über den beiden parallelen Seitenflächen (38) des Rumpfs der Kontakteinheit angeordnet sind.

3. Elektrische Kontakteinheit nach einem der Ansprüche 1 oder 2,
**dadurch gekennzeichnet, dass** sich der Kragen(38) seitlich bis jenseits der zweiten Verbindungsenden (30) der Kontaktzungen (14) erstreckt.

4. Elektrische Kontakteinheit nach einem der vorhergehenden Ansprüche,
**dadurch gekennzeichnet, dass** der Kragen(38) mit der Oberseite (24) der Kontakteinheit einen Absatz (42) begrenzt, um die Montage der Kontakteinheit (10) in einer in einer Platte (P) geformten Öffnung (44) zu ermöglichen, wobei die Oberseite (24) der Kontakteinheit (10) mit der entsprechenden Seite (50) der Platte (P) bündig ist.

5. Elektrische Kontakteinheit nach einem der vorhergehenden Ansprüche,
**dadurch gekennzeichnet, dass** der Rumpf aus isolierendem Material der Kontakteinheit einen einen Träger für die Kontaktzungen (14) formenden ersten Teil (12) und einen einen oberen Deckel formenden zweiten Teil (16) umfasst, und dass der Kragen (38) auf dem Deckel (16) geformt ist.

6. Elektrische Kontakteinheit nach Anspruch 5 in Kombination mit Anspruch 4,
**dadurch gekennzeichnet, dass** der Absatz (42) auf dem Deckel (16) geformt ist.

## Claims

1. Electrical connector (10) for the connection of an electronic memory card including on one of its main faces a plurality of electrical contact pads aligned parallel to the direction of insertion of the card into a read/write device, the connector including a moulded body (12, 16) made of insulating material having a plane upper face (24) parallel to the insertion direction of the card and a plurality of electrical conductors in the form of elastically deformable blades (14) which extend parallel to the insertion direction of the card, each contact blade (14) comprising a curved first end (26) for contact with one of the pads of the card, projecting above the plane upper face (24) of the body of the connector, a central portion for linking the blade (14) to the body and a second end (30) for connecting the blade (14) to a processing circuit of the read/write device laterally projecting from the upper face of the body, the body (12, 16) made of insulating material including an upper flange (38) which extends laterally at least until the second connection ends (30) of the blades (14), **characterized in that** the flange (38) includes a series of recesses (48) arranged in line with the second connection ends (30) in order to allow access, from the upper face (24) of the connector (10), to these second ends with a view to connecting them, by infrared or ultrasonic welding.

2. Electrical connector according to Claim 1, **characterized in that** the flange consists of two parallel sections (38) arranged respectively above two parallel lateral faces (36) of the body of the connector.

3. Electrical connector according to either of Claim 1 and 2, **characterized in that** the flange (38) extends laterally beyond the second ends (30) for connecting the contact blades (14).

4. Electrical connector according to any one of the preceding claims, **characterized in that** the flange (38) delimits, with the upper face (24) of the connector, a shoulder (42) in order to allow the connector (10) to be mounted in an opening (44) formed in a board (P) with the upper face (24) of the connector (10) flush with a corresponding face (50) of the board (P).

5. Electrical connector according to any one of the preceding claims, **characterized in that** the body made of insulating material of the connector includes a first part (12) forming a support for the contact blades (14) and a second part (16) forming an upper cover and **in that** the flange (38) is formed on the cover (16).

6. Electrical connector according to Claim 5, taken in combination with Claim 4, **characterized in that** the shoulder (42) is formed in the cover (16).
